Europäisches Patentamt

(19) European Patent Office

Office européen des brevets

(11) Publication number: **0 035 661**
A2

(12) # EUROPEAN PATENT APPLICATION

(21) Application number: **81100987.7**

(22) Date of filing: **12.02.81**

(51) Int. Cl.³: **C 08 F 6/16**

(30) Priority: **28.02.80 IT 2022780**

(43) Date of publication of application:
**16.09.81 Bulletin 81/37**

(84) Designated Contracting States:
**BE DE FR GB NL**

(71) Applicant: Montedison S.p.A.
Patents & Licensing Dept. Foro Buonaparte, 31
I-20121 Milan(IT)

(72) Inventor: Govoni, Gabriele
63, Via Pilastro
Renazzo Ferrara(IT)

(72) Inventor: Guardigli, Pierluigi
46, Via Lucrezia Aguiari
Ferrara(IT)

(72) Inventor: Rubichi, Gianfranco
93, Via Camillo Mazza
Ferrara(IT)

(54) Continuous process for the removal of monomers from polymeric emulsions.

(57) Continuous process for the removal of monomers and possible volatile substances from polymeric emulsions by stripping in a vapor current, during the coagulation phase of the emulsions, in the presence of coagulating agents, at temperatures between 100° and 150 °C and at pressures of 1-5 atm., with dwell times of between 5 and 20 minutes.

EP 0 035 661 A2

Croydon Printing Company Ltd

The present invention concerns a continuous process for the removal of unreacted monomers and of possible volatile substances from polymeric emulsions, with the contemporaneous coagulation of the emulsions.

It is known to recover the polymers, that are substantially free from unreacted monomers, from polymeric emulsions by subjecting these latter to a purification that will remove said monomers and by then coagulating the emulsions thus purified.

Numerous methods have already been suggested for the removal of unreacted monomers from polymeric emulsions, in general operating on the principle of stripping in a vapor current. Such methods have, however, various drawbacks which derive from the formation of foams, coaguli and soilings in general, which make it difficult and burdensome to operate the separation apparatuses, but, above all, they do not allow to achieve on an industrial scale and with low consumptions of vapour, the substantial removal of the monomeric residues from the polymer.

According to one of these methods, the latex is partially evaporated in a disc heat exchanger and is then separated from the vapours in a separating column. However, in order to be able to attain low contents in residual monomers, said operations must be carried out in either 2, 3 or more stages with the consequential risk of meeting phenomena of partial coagulation of the emulsions, favoured by the presence of residual monomers leading to the formation of coaguli and soilings that will hinder or at least make the suc

BAD ORIGINAL

- 3 -

cessive operations of the transfer of the emulsions more difficult.

According to another method, the residual monomers are removed by using thin-film centrifuges that are, however, rather expensive and of low productivity, besides showing high operational as well as maintenance costs.

Also the recovery of the polymers by means of coagulation of their emulsions using suitable coagulants such as $CaCl_2$, $Al_2(SO_4)_3$ and the likes, presents the drawback that it is necessary to use encumbering (bulky) equipment that works under heavy operational conditions because of the formation of soilings.

It has now been found that it is possible to achieve directly and in one single operation both the substantial removal of the residual monomers and of the volatile substances from the polymeric emulsions, as well as the separation from said emulsions of the polymers, using a continuous process that, besides overcoming the previously specified drawbacks of the previous purification and separation methods, attains a very high productivity and efficiency with an equipment of a modest size and with low consumptions of steam.

Thus, one object of this invention is that of providing a continuous process for the removal of unreacted monomers and of possible volatile substances from polymeric emulsions by the stripping method in a current of vapour (steam) during the coagulation phase of the emulsions, said process consisting of the following phases or stages:

. . .

BAD ORIGINAL

- 4 -

A.  Separate and continuous feeding to a stripping vessel, fitted with a mechanical stirrer, of: a) an aqueous polymeric emulsion containing unreacted monomers, b) coagulating agents and, through the bottom of the vessel, c) water vapor (steam), maintaining the system in the vessel at a temperature of between 100° and 150 °C, at a pressure of 1-5 atm., for dwelling times comprised between 5 and 20 minutes, said steam being fed in quantities sufficient to maintain the system at the pre- -established temperature and such as to allow the stripping of the unreacted monomers with a specific steam consumption of: 0.1 - 2 Kg/Kg of polymer;

B.  Feeding of the vapors flowing out of the apparatus and containing small quantities of dragged off solids, into an efficient solid-vapor separator, with the recycling of the separated solids into the same stripping vessel;

C.  Feeding the solid-liquid suspension, flowing out of the bottom of the stripping vessel, to the solid-liquid separator.

The solid particles of the polymer separated in stage C. may successively be dried according to conventional methods, in order to obtain polymers with a controlled residual humidity.

With this process any type of polymer or copolymer emulsions may be treated.

BAD ORIGINAL

More particularly, especially suited seem to be the emulsions obtained by polymerizing styrene with acrylonitrile, of alpha-methylstyrene with acrylonitrile, of polybutadiene, for instance, grafted with styrene and acrylonitrile and in general containing from 10% to 50% by weight of polymer, calculated on dry product and up to 10% by weight of unconverted monomers.

It is preferable that the suspension inside the stripping apparatus shall have a polymer concentration of 15-20% by weight which may be obtained, in the case of emulsions with a high polymer concentration, by feeding into the stripping vessel, simultaneously with the emulsion, a suitable quantity of demineralized water.

The coagulating agents are those commonly used for the precipitation of emulsions such as the aqueous solutions of inorganic salts as for instance: $CaCl_2$, $Al_2(SO_4)_3$, NaCl, $Na_2SO_4$, $K_2SO_4$, $MgCl_2$, $MgSO_4$, $KNO_3$ and the likes, as well as also inorganic and organic acids such as for instance: sulphuric, phosphoric, hydrochloric, acetic, formic acid and organical compounds such as polyethylenoxide and polyethylenamine, in quantities ranging from 1% - 20% by weight with respect to the content in solids of the emulsion.

As a solid-vapor separator in stage B. there may be used conveniently a cyclon and moreover the separated vapor phase, consisting of water vapor and of the unreacted monomers, may then be condensed for recovering said monomers.

In stage C. there may be used any kind of conventional

solid-liquid separator such as for instance: a vibrating screen, a centrifuge, a centrifugal cleaner.

The present process may be carried out with even greater efficiency if the contacting of the vapor with the polymeric emulsion together with the coagulants is achieved in several steps, using a plurality of stripping vessels or by using one single container inglobating a plurality of stages of contacting in which the vapor meets the polymer in counter-current.

If with this process the stripping and the coagulation of the polymeric emulsions is carried out contemporaneously, that is, by effecting the stripping of the emulsions in the presence of coagulating agents, there will be surprisingly obtained a removal of the monomers that will be much faster and more complete than it is the case when operating the stripping on the emulsions before the coagulation, and this without the problems due to the formation of foams, cloggs and soilings.

Operating in a continuous way with this process, it is possible to obtain polymers that are practically free of monomers and this with very short dwell times of 5-20 minutes and with specific vapor consumptions of only 0.1-2 Kg/Kg of polymer.

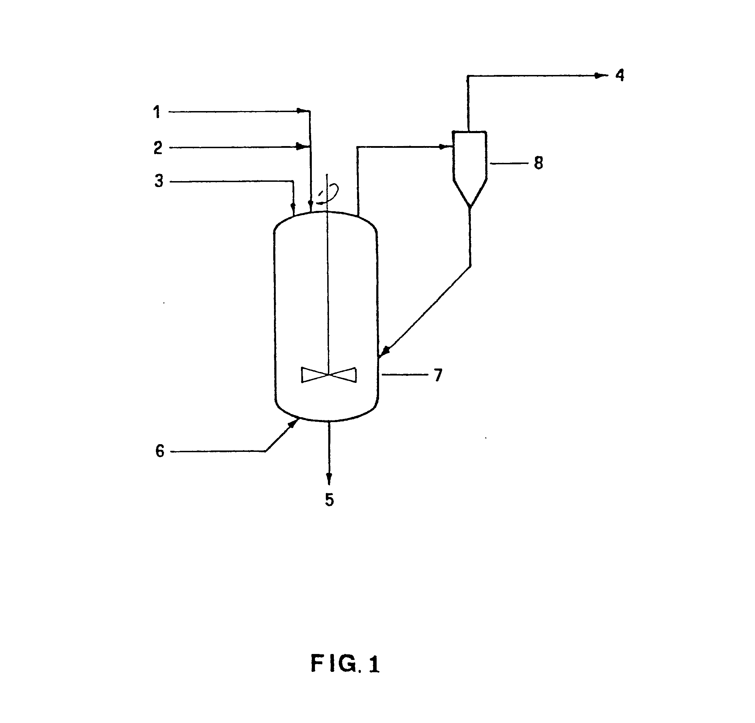

In figure 1 is shown an apparatus for carrying out the process according to this invention.

In said figure there is shown a stripping vessel (7), fitted with a mechanical stirrer, the inlet (1) of the po-

BAD ORIGINAL

lymeric emulsion, inlet (2) of the possible demineralized water, the inlet (3) for the coagulants and the inlet (6) for the water vapor for the stripping. Moreover, there is also shown the cyclon (8) into which are conveyed the stripping vapors which contain small quantities of solids and where there takes place the separation of one solid phase which is then recycled into the stripping vessel, and of a vapor phase which is discharged through outlet (4).

With (5) is marked the outlet of the solid-liquid suspension free of monomer.

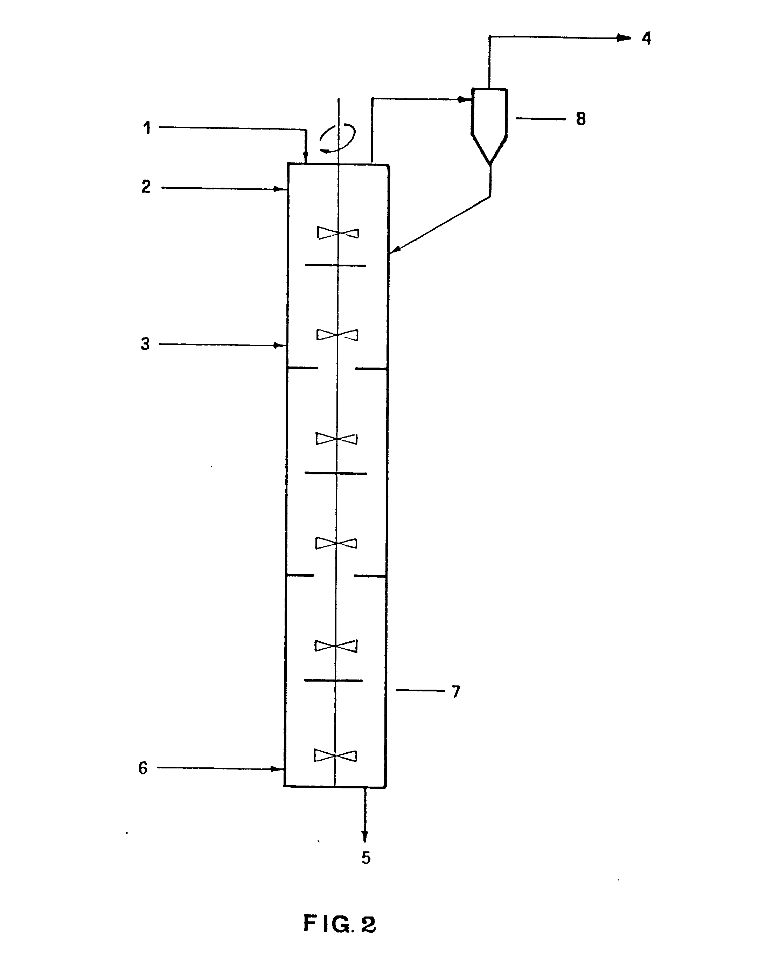

Moreover, it is possible to utilize a plurality of apparatuses of the type illustrated in fig. 1, arranged in series or a vibrated equipment consisting of a plurality of water vapor contacting stages of the type illustrated in figure 2, wherein the numbers shown have the same meaning indicated in figure 1.

To even more clearly illustrate, without in any way limiting the inventive scope of the invention, in the following there is given an example.

EXAMPLE n° 1

There was used a multi-stage apparatus of the type illustrated in figure 2, the stripping vessel having a diameter of 300 mm and a height of 1800 mm, fitted with a mechanical stirrer and in which vessel there realized 6 stages of contact of the polymeric suspension with the water vapor fed in counter-current. Into this apparatus there continuously fed in:

BAD ORI

- in the direction of the arrow (1) 200 lt/hr of an aqueous emulsion containing 35% by weight of polybutadiene grafted with styrene and acrylonitrile consisting of 53% by weight of butadiene, 33% by weight of styrene and 14% by weight of acrylonitrile, copolymerized with each other, and containing moreover as unreacted monomers 10,000 ppm of styrene and 5,000 ppm of acrylonitrile both referred to the dry polymer;

- in the direction of arrow (2), 250 lt/hr of demineralized water;

- in the direction of arrow (3), 3.2 lt/hr of an aqueous solution containing 35% by weight of $CaCl_2$;

- in the direction of arrow (6), water vapor in such quantities as to achieve in the apparatus a temperature of 103 °C and a vapour flow rate at the outlet, according to arrow (4), of 35 Kg/hr.

The solid-liquid suspension discharged at the outlet (5), was conveyed to a vibrating screen where there was separated a polymer containing less than 5 ppm of acrylonitrile and 100 ppm of styrene as residual monomers.

. . .

BAD ORIGINAL

## C L A I M S

1) Continuous process for the removal of unreacted monomers and of possible volatile substances from polymeric emulsions by means of stripping in a vapor current, characterized in that said stripping is carried out during the coagulation phase of the emulsions in the presence of coagulating agents.

2) Process according to claim 1, characterized in that it consists of the following stages:

A. Continuous and separate feeding into a stripping vessel, fitted with a mechanical stirrer, of:
a) an aqueous polymeric emulsion containing unreacted monomers, b) coagulating agents and, through the bottom of the stripping vessel, c) water vapor, maintaining said system inside the vessel at temperatures ranging from 100° to 150 °C, at pressures of 1-5 atm., for dwell times of 5 - 20 minutes, said steam being fed in such quantities as to maintain the system at a pre-established temperature and such as to achieve the stripping of the unreacted monomers with specific vapor consumptions of between 0.1 and 2 Kg/Kg of polymer.

B. Feeding of the vapors, flowing out from the upper end of the apparatus and containing small quantities of dragged off solids, into an efficient solid-vapor separator with the re-cycling of the separated solids into the same stripping vessel.

BAD ORIGINAL

C. Feeding of the solid-liquid suspension flowing out of the bottom of the stripping vessel into a solid-liquid separator.

3) Process according to claim 2, wherein the solid-vapor separator of phase B. consists of a cyclon.

4) Process according to claims 2 and 3, characterized in that in phase A., together with the emulsion there is also fed in demlineralized water so as to get in the inside of the stripping apparatus a suspension containing 15-20% by weight of polymer.

5) Process according to the above preceding claims, characterized in that the polymers of the emulsion are styrene-acrylonitrile copolymers, alpha-methylstyrene-acrylonitrile and butadiene-styrene-acrylonitrile copolymers.

6) Process according to the above preceding claims, characterized in that the coagulating agents are either inorganic salts or organic or inorganic acids, or substances such as polyethylenoxide and polyethylenamine.

BAD ORIGINAL

FIG. 1

0035661

FIG. 2